# DEMANDE DE BREVET EUROPEEN

(11) **EP 0 844 494 A1**
(43) Date de publication de la demande: **27.05.1998**
(21) Numéro de dépôt: 97402426.7
(22) Date de dépôt: 14.10.1997
(51) Int. Cl.: G01S 7/481, G02B 1/10

(54) **Lidar monostatique**

(30) Priorité: 22.10.1996 FR 9612802
(71) Demandeur: THOMSON-CSF, 75008 Paris (FR)
(72) Inventeur: Albouy, Patrice, 94117 Arcueil Cedex (FR); Grolier, Valérie, 94117 Arcueil Cedex (FR); Thibout, Paul, 94117 Arcueil Cedex (FR)
(74) Mandataire: Beylot, Jacques

(57) **Abrégé**

Ce LIDAR monostatique est à rayonnement pulsé et comporte pour la séparation du faisceau de l'émetteur laser (1), de l'écho laser rétrodiffusé par une cible destiné à être détecté par le photodétecteur du récepteur (2), un séparateur optique (3) qui dévie dans des directions différentes un faisceau lumineux incident, selon qu'il le transmet ou le réfléchit et dont le coefficient de réflexion ou de transmission varie en fonction de la densité énergétique dudit faisceau lumineux incident. Avantageusement, ce séparateur optique est constitué d'une couche de dioxyde de vanadium VO₂ déposée sur une lamelle transparente. Un tel séparateur optique permet d'obtenir un rendement global émission/réception supérieur à celui d'un séparateur optique à lame semi-réfléchissante tout en conservant les avantages qu'un tel séparateur optique induit sur l'architecture optique d'un LIDAR: simplicité, réglage aisé, faible encombrement et faibles réflexions parasites.

## Description

La présente invention concerne les systèmes optoélectroniques actifs à laser de type LIDAR (Llght Detection And Ranging) monostatiques qui présentent rassemblés sur un même site, un émetteur laser illuminant une scène à explorer avec un faisceau lumineux et un récepteur à détecteur photoélectrique analysant l'écho laser rétrodiffusé par la scène. De tels systèmes qui peuvent fournir des indications sur la distance, la vitesse et la réflectance d'une cible ont une grande variété d'utilisation, comme la télémétrie, l'imagerie active, la détection de polluants, les contre-mesures optroniques.

L'une des contraintes essentielles des systèmes optroniques actifs à laser de type LIDAR monostatique est la séparation du faisceau lumineux de l'émetteur laser dont la puissance crête peut atteindre plusieurs millions de Watts et de l'écho laser rétrodiffusé à acheminer vers le récepteur à photodétecteur dont la puissance peut être inférieure à quelques dizaines de nanoWatts. Cette séparation entre les faisceaux lumineux d'émission et de réception doit se faire avec le moins de pertes possibles afin de permettre à l'émetteur laser d'émettre un maximum de flux lumineux et au détecteur photoélectrique du récepteur de recevoir un maximum de flux lumineux de l'écho laser. La qualité de la séparation obtenue s'évalue par la valeur du produit η du rendement émission par le rendement réception qui doit être la plus élevée possible.

On connaît plusieurs méthodes pour réaliser cette séparation :
- Une première méthode, qui est la plus simple, consiste à utiliser des pupilles émission et réception entièrement séparées. L'augmentation de la taille de l'optique de sortie due à la juxtaposition des deux pupilles est souvent rédhibitoire car elle a de nombreux inconvénients dont :
   - un encombrement important ;
   - dans le cas de l'utilisation d'un miroir de pointage et de poursuite en sortie du dispositif, les performances du mécanisme de pointage du miroir (stabilisation, vitesse de balayage, ralliement et accélérations angulaires des faisceaux) diminuent au fur et à mesure que la taille du miroir augmente tandis que la complexité optomécanique de l'asservissement et le coût s'accroissent
   - augmentation de la vulnérabilité avec l'encombrement ;
   - diminution de l'aérodynamisme du porteur;
   - perte de sensibilité et zone aveugle inhérentes au non recouvrement entre le champ délimité par la divergence de l'émission laser et le champ de réception car on ne regarde jamais tout à fait l'endroit que l'on éclaire.
- Une deuxième méthode consiste à utiliser une lame semi-transparente 50/50 qui réfléchit l'un des faisceaux, par exemple le faisceau de l'émetteur laser et transmet l'autre, le faisceau de l'écho laser. Cette solution occasionne une perte de 50% à la fois sur le flux lumineux émis et sur le flux lumineux reçu, soit une perte globale d'un facteur 4 (η < 25%) sur l'ensemble du bilan de la liaison, inacceptable pour la plupart des applications.
- Une troisième méthode consiste à utiliser en réception une optique "trouée" dont la pupille est privée d'une surface centrale réservée à la pupille de l'optique d'émission. Les pertes occasionnées en réception par cette occultation sont égales au rapport de la surface de la pupille de réception à la surface d'occultation. Cette solution entraîne des dégradations optiques se traduisant par une diminution de la fonction de transfert de modulation. Mais surtout, elle est à proscrire lorsque la pupille de l'optique d'émission est importante. C'est le cas dès lors que les divergences laser d'émission sont faibles et les longueurs d'onde importantes. Dans la bande des infrarouges lointains 8 -12 µm, il est ainsi courant de rencontrer une pupille d'émission égale à la pupille de réception ce qui rend cette troisième solution inutilisable.
- Une quatrième méthode consiste à séparer les faisceaux d'émission et de réception par la polarisation. Pour ce faire, on peut utiliser une lame transparente sous incidence brewstérienne suivie d'une lame quart d'onde d'épaisseur λ/4. Le faisceau laser d'émission qui est polarisé linéairement à l'origine traverse la lame transparente sous incidence brewstérienne qui est orientée de façon que son plan d'incidence contienne la direction de polarisation du faisceau laser d'émission, puis la lame quart d'onde qui transforme sa polarisation linéaire en une polarisation circulaire. Après réflexion sans dépolarisation sur la scène, l'écho laser revient avec une polarisation circulaire, traverse en sens inverse la lame quart d'onde qui transforme sa polarisation circulaire en une polarisation linéaire orthogonale à celle du laser d'émission, et se réfléchit sur la lame transparente sous incidence brewstérienne ce qui assure sa séparation du faisceau d'émission. Cette solution a différents inconvénients. Tout d'abord, la séparation obtenue n'est pas multispectrale mais limitée à une bande de fréquence étroite en raison de l'utilisation de la lame quart d'onde. Cet inconvénient est particulièrement gênant pour les systèmes de contre-mesure laser qui peuvent nécessiter une accordabilité intra-bande et multi-bande. En outre, une dépolarisation de la scène explorée peut occasionner des pertes importantes en réception puisque seule la composante de l'écho laser en polarisation circulaire est détectée. De plus, les composants optiques nécessaires sont coûteux.

La présente invention a pour but de lutter contre les inconvénients précités et d'obtenir des rendements d'émission et de réception les plus élevés possibles à un coût aussi faible que possible.

Elle a pour objet un LIDAR monostatique à rayonnement pulsé et pupilles d'émission et de réception confondues, comportant un émetteur laser engendrant un rayonnement lumineux pulsé d'illumination d'une scène à explorer, un récepteur à photodétecteur analysant les échos lumineux rétrodiffusés par la scène et un séparateur optique assurant la séparation du chemin optique des échos lumineux rétrodiffusés par la scène, de celui du rayonnement lumineux pulsé de l'émetteur laser pour ne faire parvenir en entrée du récepteur à détecteur photoélectrique que les seuls échos lumineux rétrodiffusés par la scène. Ce LIDAR est remarquable en ce que son séparateur optique est un composant qui dévie dans des directions différentes un faisceau lumineux incident, selon qu'il le transmet ou le réfléchit et dont le coefficient de réflexion ou de transmission varie en fonction de la densité énergétique dudit faisceau lumineux incident.

Avantageusement, le séparateur optique a un coefficient de réflexion qui augmente avec la densité énergétique d'un faisceau lumineux incident. Il dévie par réflexion le rayonnement lumineux de l'émetteur laser de manière à assurer son guidage depuis l'émetteur laser où il suivait un chemin distinct de celui des échos rétrodiffusés, jusqu'à sa sortie du LIDAR où il se met à suivre un chemin commun avec les échos rétrodiffusés. Il se laisse par contre traverser par les échos rétrodiffusés qui suivaient un chemin commun avec le rayonnement lumineux de l'émetteur laser depuis leur entrée dans le LIDAR, pour les diriger sur un chemin distinct de celui du rayonnement lumineux de l'émetteur laser menant au photodétecteur du récepteur.

Avantageusement, le séparateur optique comporte une mince couche de dioxyde de vanadium déposée sur une lamelle transparente en germanium.

Avantageusement, le séparateur optique comporte une suspension de particules de carbone dans de l'éthanol liquide emprisonnée entre deux lamelles transparentes en verre.

Grâce à la variation du coefficient de réflexion ou de transmission du séparateur optique en fonction de la présence ou de l'absence à sa surface des impulsions lumineuses de forte densité énergétique de l'émetteur laser, on obtient, à l'émission et à la réception du LIDAR monostatique à rayonnement pulsé qui en est équipé, des rendements lumineux supérieurs à 50% qui sont donc plus avantageux que ceux résultant de l'emploi d'un séparateur optique à lame semi-transparente tout en conservant les avantages d'une séparation à très large bande spectrale et d'une superposition des pupilles d'émission et de réception sans obturation centrale de cette dernière.

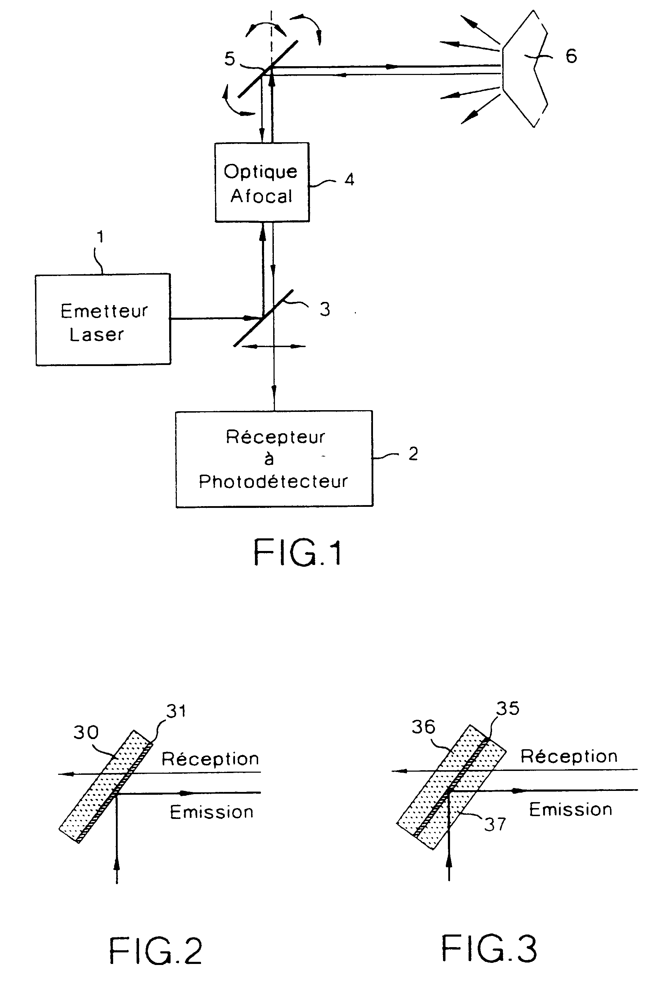

D'autres caractéristiques et avantages de l'invention ressortiront ci-après de la description d'un mode de réalisation de l'invention donné à titre d'exemple. Cette description sera faite en regard du dessin dans lequel
- une figure 1 est un schéma synoptique d'un LIDAR monostatique à rayonnement pulsé, et
- des figures 2 et 3 sont des exemples de séparateurs optiques selon l'invention utilisables dans le schéma de la figure 1.

On distingue sur la figure 1 les principaux éléments d'un LIDAR monostatique à rayonnement pulsé. Ce dernier comporte un émetteur laser à rayonnement pulsé 1 et un récepteur à photodétecteur 2 disposés derrière un séparateur optique 3 réunissant leurs chemins optiques, puis, sur le chemin optique commun au faisceau lumineux émis par l'émetteur laser 1 et au faisceau lumineux reçu par le photodétecteur du récepteur 2, une optique afocale 4 destinée à collimater les faisceaux et un miroir mobile d'adressage 5 permettant de balayer la scène à explorer matérialisée sur la figure 1 par une cible 6. En plus de ces principaux éléments, un LIDAR monostatique à rayonnement pulsé peut comporter d'autres optiques de mise en forme ou de balayage des faisceaux disposées en sortie à la suite du miroir d'adressage 5 ou intercalées entre le récepteur à photodétecteur 2 et le séparateur optique 3.

Le rayonnement pulsé de l'émetteur laser 1 parvient au séparateur optique 3 qui le dirige au travers de l'optique afocale 4 sur le miroir d'adressage 5 assurant son pointage sur la cible 6. L'écho lumineux rétrodiffusé par la cible 6 suit un chemin inverse; Capté par le miroir d'adressage 5, il traverse en sens inverse l'optique afocale 4 et parvient au séparateur optique 3 qui le dirige vers le photodétecteur du récepteur 2. En imposant au miroir d'adressage 5 un mouvement de balayage lignes et trame, on peut réaliser une image de la scène à explorer.

Le séparateur optique 3 utilise la réflexion et la transmission sur ou au travers d'une lamelle pour combiner le rayonnement pulsé de l'émetteur laser 1 aux échos lumineux rétrodiffusés par la cible dans l'optique afocale 4 avant son pointage par le miroir d'adressage 5 et pour séparer les échos lumineux rétrodiffusés par la cible du rayonnement pulsé du laser après leur passage par le miroir d'adressage 5 et l'optique afocale 4. La réflexion sur la lamelle sert à dévier le rayonnement pulsé de l'émetteur laser alors que les échos lumineux rétrodiffusés par la cible sont transmis sans déviation au photodétecteur du récepteur 2. On remarque qu'avec la disposition adoptée, il ne peut pas y avoir de fuite du rayonnement de l'émetteur laser 1 dans le photodétecteur du récepteur 2 car la portion du rayonnement de l'émetteur laser 1 qui parvient à traverser la lamelle suit une trajectoire à 90° du photodétecteur du récepteur 2. Le coefficient de réflexion ou de transmission de la lamelle du séparateur optique 3 varie en fonction de la densité de puissance du faisceau lumineux incident. Au delà d'un seuil S₀ de densité de puissance, le coefficient de réflexion est maximal, ce qui permet au séparateur de réfléchir le rayonnement pulsé de l'émetteur laser dont la puissance crête est importante. En deçà de ce seuil S₀, c'est le coefficient de transmission qui est maximal de sorte que les échos rétrodiffusés par la cible dont la densité de puissance est très faible parviennent au photodétecteur du récepteur 2 entre les impulsions du rayonnement pulsé de l'émetteur laser 1, cela à la condition que les variations des coefficients de réflexion et de transmission se fassent rapidement, dans un délai inférieur au temps de retour d'écho.

Un tel séparateur optique présente un intérêt par rapport à un séparateur optique classique à lame semi-transparente dès que la valeur maximal du coefficient de réflexion au delà du seuil de densité de puissance S₀ dépasse 0,5 et que la valeur maximal du coefficient de transmission en deçà du seuil S₀ de densité de puissance dépasse 0,5.

Pour donner une idée du dimensionnement, on se place dans le cas d'un LIDAR opérant dans la bande infrarouge moyen correspondant à la fenêtre atmosphérique 8 - 12 µm. Un tel LIDAR peut servir à des contre-mesures laser, de la détection d'agents chimiques tels que des polluants atmosphériques, de la télémétrie ou du guidage de missile. On aurait pu tout aussi bien choisir une autre bande spectrale voire plusieurs bandes spectrales mais celle-ci est particulièrement intéressante en raison de ces nombreuses applications.

La portée requise d'un tel équipement peut être supérieure à 10 km avec un champ de pointage du faisceau d'illumination de plusieurs dizaines de degrés en site comme en gisement devant par ailleurs être couvert avec des vitesses de ralliement ou de poursuite angulaire de plusieurs radians par seconde. En outre cet équipement doit pouvoir émettre de façon accordable, au moins pour les applications de détection d'agents chimiques et de contre-mesure laser, dans la bande thermique entre 8 et 12 µm avec une divergence en général inférieure au milliradian. Pour tenir ces performances, on choisit une divergence typique totale de 0,3 mrad et une pupille de réception d'environ 130 mm. En supposant que le faisceau laser possède une divergence correspondant à deux fois la limite de diffraction, la pupille d'émission doit avoir environ 130 mm, si bien que les pupilles d'émission et de réception sont de dimensions très proches.

A titre indicatif, parmi les méthodes classiques de séparation mentionnées précédemment, la plus adaptée est celle présentant des pupilles d'émission et de réception distinctes. Elle conduit pour le miroir d'adressage à des dimensions de 30 cm par 40 cm lorsque ce dernier est utilisé en configuration 1:1, c'est-à-dire lorsqu'il tourne du même angle que le faisceau, et à des dimensions encore plus importantes lorsqu'il est utilisé en configuration 1:2, c'est-à-dire qu'il tourne d'un angle moitié par rapport au faisceau. Ces dimensions du miroir d'adressage sont, dans la majorité des cas d'utilisation, non compatibles avec les performances requises sur ce miroir (asservissement, qualité optique, etc...) et avec l'encombrement résultant.

On propose ici de reprendre le schéma de la figure 1, avec des pupilles d'émission et de réception confondues, et un séparateur optique par réflexion et transmission dont le coefficient de réflexion R ou de transmission T varie avec la densité de puissance du faisceau incident, le coefficient de réflexion R étant supérieur à 0,5 pour un faisceau incident d'une densité de puissance supérieure à un seuil S₀, et le coefficient de transmission T étant supérieur à 0,5 dans les autres cas.

Avec un émetteur laser engendrant un faisceau lumineux pulsé d'un diamètre de 5 mm et d'une énergie impulsionnelle de 100 mJ sur une durée de 10 ns à 10 µs, la fluence du rayonnement obtenue sur le séparateur optique supposé incliné à 45° est d'environ 350 mJ/cm². On peut donc choisir un seuil énergétique S₀ de l'ordre de 300 mJ/cm² sur une durée de 10 ns à 10 µs de façon que le séparateur optique soit réfléchissant à chaque fois qu'une impulsion lumineuse lui parvient de l'émetteur laser et soit transparent aux échos laser rétrodiffusés qui lui parviennent entre les impulsions lumineuses de l'émetteur laser et qui ont une densité de puissance inférieure de plusieurs ordres de grandeur au seuil énergétique S₀.

La figure 2 donne un exemple d'un tel séparateur optique. Celui-ci se compose d'une lamelle de germanium 30 transparente au rayonnement infrarouge dans la bande 8 - 12 µm recouverte d'une couche de dioxyde de vanadium VO₂ 31. La couche de dioxyde de vanadium a la particularité de présenter un changement d'état avec une transition brusque au voisinage de la température de 68° C. En dessous de cette température, elle est semiconductrice et transparente, et au dessus, elle devient métallique et réfléchissante. Des détails sur son obtention et ses propriétés peuvent être trouvés dans l'article de D.P. Partlow, S.R. Gurkovich, K.C. Radford, et L.J. Denes intitulé :"Switchable vanadium oxide films by a sol-gel process." J. Appl Phys. 70 (1), 1 July 1991. Typiquement, avec une couche de dioxyde de vanadium de 0,5 µm traitée antireflet et déposée sur une lamelle de germanium, on obtient un coefficient de transmission en infrarouge T de 70 % et un coefficient de réflexion R nul dans des conditions d'illumination faibles et à température ambiante, alors que le coefficient de transmission chute et celui de réflectivité augmente au delà de 60 % dès que la densité d'énergie lumineuse dépasse S₀. La transition d'un fort coefficient de transmission à un fort coefficient de réflexion et réciproquement, sous l'action d'un faisceau laser pulsé se fait en un très court délai devant la durée de l'impulsion laser. Après le passage de l'impulsion d'émission, la transition inverse s'effectue en une durée inférieure à la microseconde, compatible avec une application à la séparation des voies optiques d'émission et de réception d'un LIDAR pulsé.

La figure 3 donne un autre exemple de séparateur optique utilisable. Celui-ci est constitué d'un voile de particules de carbone en suspension dans un bain d'éthanol liquide 35 emprisonné entre deux lamelles transparentes 36, 37 en verre. Pour un flux lumineux incident faiblement énergétique, la couche de particules de carbone en suspension dans l'éthanol présente un coefficient de transmission proche de 1. Mais dès que le flux lumineux incident dépasse une certaine densité d'énergie, les particules de carbone sont ionisées et forment localement un microplasma qui entraîne un phénomène de cavitation dans l'éthanol provoquant l'apparition de petites bulles de vapeur modifiant le coefficient de réflexion qui augmente dans une très large proportion au point de rendre le dispositif totalement réflecteur lorsqu'il est vu sous une certaine incidence. Le passage du voile de particule de carbone en suspension dans de l'éthanol liquide d'un fort coefficient de transmission à un fort coefficient de réflexion et inversement, sous l'action d'un rayonnement laser pulsé à grande densité d'énergie est très court devant la durée de l'impulsion laser émise, compatible avec une application à la séparation des voies optiques d'émission et de réception d'un LIDAR pulsé. Pour davantage de détails sur les propriétés optiques d'un tel voile de particules de carbone en suspension dans de l'éthanol liquide, on peut se reporter à l'article de C. M. Lawson et R. R. Michael intitulé "Nonlinear reflection at a dielectric-carbon suspension interface: Macroscopic theory and experiment." Appl. Phys. Lett. 64 (16), 18 April 1994.

Le LIDAR monostatique à rayonnement pulsé, équipé d'un séparateur optique à coefficient de réflexion ou de transmission variable en fonction de la densité énergétique du rayonnement lumineux incident, tel que celui qui vient d'être décrit, a l'avantage d'avoir des pupilles d'émission et de réception confondues sans obturation centrale de la pupille de réception. Cela permet d'utiliser un miroir d'adressage pour le pointage du faisceau émis et le captage des échos rétrodiffusés de faible taille ayant par conséquent un faible encombrement et une grande agilité. De plus, ce LIDAR peut fonctionner dans une très large bande spectrale (typiquement de 0,3 µm à 12 µm) et possède une architecture optique simple et peu coûteuse, de réglage aisé, avec des réflexions parasites faibles.

## Revendications

1. LIDAR monostatique à rayonnement pulsé et pupilles d'émission et de réception confondues, comportant un émetteur laser (1) engendrant un rayonnement lumineux pulsé d'illumination d'une scène à explorer, un récepteur (2) à photodétecteur analysant les échos lumineux rétrodiffusés par la scène et un séparateur optique (3) assurant la séparation du chemin optique des échos lumineux rétrodiffusés par la scène, de celui du rayonnement lumineux pulsé de l'émetteur laser (1) pour ne faire parvenir en entrée du récepteur (2) à détecteur photoélectrique que les seuls échos lumineux rétrodiffusés par la scène, caractérisé en ce que ledit séparateur optique (3) est un composant qui dévie dans des directions différentes un faisceau lumineux incident, selon qu'il le transmet ou le réfléchit et dont le coefficient de réflexion ou de transmission varie en fonction de la densité énergétique dudit faisceau lumineux incident.

2. LIDAR selon la revendication 1, caractérisé en ce que ledit séparateur optique (3) a un coefficient de réflexion qui augmente avec la densité énergétique d'un faisceau lumineux incident.

3. LIDAR selon la revendication 2, caractérisé en ce que, ledit séparateur optique (3) comporte une mince couche de dioxyde de vanadium VO₂ (31) déposée sur une lamelle transparente (30).

4. LIDAR selon la revendication 3, caractérisé en ce que ladite lamelle transparente (30) est en germanium.

5. LIDAR selon la revendication 3, caractérisé en ce que la dite couche de dioxyde de vanadium VO₂ a une épaisseur de l'ordre de 0,5 µm

6. LIDAR selon la revendication 2, caractérisé en ce que ledit séparateur optique (3) comporte une suspension (35) de particules de carbone dans de l'éthanol liquide emprisonnée entre deux lamelles transparentes en verre (35, 36).
